## Europäisches Patentamt

## European Patent Office

## Office européen des brevets

(11) Publication number: **0 006 335**
**B2**

(12) # NEW EUROPEAN PATENT SPECIFICATION

(45) Date of publication of the new patent specification:
08.04.87

(51) Int. Cl.⁴: **C 08 F 14/06,** C 08 F 2/18

(21) Application number: **79301099.2**

(22) Date of filling: **11.06.79**

(54) **Method for reducing wall fouling in vinyl chloride polymerization.**

(30) Priority: **13.06.78 US 915090**

(43) Date of publication of application:
**09.01.80 Bulletin 80/1**

(45) Publication of the grant of the patent:
**16.02.83 Bulletin 83/7**

(45) Mention of the opposition decision:
**08.04.87 Bulletin 87/15**

(84) Designated Contracting States:
**AT BE DE FR GB IT NL SE**

(56) References cited:
**CH-A-567 530**
**DD-A-124 924**
**FR-A-2 295 971**
**GB-A-1 368 393**
**US-A-3 669 946**

(73) Proprietor: **AIR PRODUCTS AND CHEMICALS, INC., P.O. Box 538, Allentown, Pennsylvania 18105 (US)**

(72) Inventor: **Bauman, Bernard Daniel, 777 West Germantown Pike, Plymouth Meeting, Pennsylvania 19462 (US)**

(74) Representative: **Lucas, Brian Ronald, Lucas, George & Co. 135 Westhall Road, Warlingham Surrey CR3 9HJ (GB)**

LIBER, STOCKHOLM 1987

EP 0 006 335 B2

## Description

This invention relates to a method for conditioning the internal surface(s) of a stainless steel polymerization reactor in order to inhibit subsequent reactor wall fouling during the suspension polymerization of vinyl chloride and vinyl chloride containing monomer systems in said reactor.

Wall fouling in reactors used for the suspension polymerization of vinyl chloride systems has been a problem, and particularly so in recent years because of the tight constraints imposed on vinyl chloride emission to the atmosphere. Several obvious advantages would be achieved by reducing wall fouling. First, productivity of the reactors could be increased in that the reactors would not have to be taken out of service as often for cleaning. Second, there is less product contamination due to particulate material dropping from the reactor walls into the product.

Some of the techniques proposed for inhibiting wall fouling during the polymerization of vinyl chloride are described in the following patents:.

US-A-3,778,423 discloses a process for inhibiting reactor wall fouling in a glass lined reactor by wetting the reactor surface with a solution containing a free radical inhibitor, for example, a polar organic compound such as alpha-methyl styrene or a chain terminating agent such as amine, e.g. ethylenediamine tetraacetic acid; fatty acids, an aldehyde such as acrolein, methacrolein and a conjugated diolefin such as isoprene or butadiene.

US-A-3,562,238 discloses a process for inhibiting reactor wall fouling during vinyl chloride polymerization by incorporating less than 1,000 ppm (based on the monomers) of magnesium hydroxide in the polymer recipe.

US-A-3,926,910 discloses a method for inhibiting reactor wall fouling during vinyl chloride polymerization processes by incorporating from about 0.001 to about 0.02 parts of a nitrite salt per 100 parts monomer onto the reactor surface prior to forming resinous material. The nitrite can be included in the polymerization recipe or sprayed onto the reactor surface as an aqueous solution.

US-A-3,842,055 discloses a process for inhibiting reactor wall fouling in the suspension polymerization of vinyl chloride by spraying a fine stream of water in an amount of 20-100% volume of the volume of monomers onto the reactor dome during polymerization.

US-A-3,669,946 discloses a method of inhibiting polymer deposition on reactor walls and equipment by coating the surfaces with a polar organic compound such as benzene or ethanol. Example 1 shows applying the solvent to the reactor surfaces and then drying the solvent therefrom. Example 7 in the patent shows that small additions of a caustic soda solution, e.g. in the amount of 0.1% based on vinyl chloride content, give some improvement in reducing polymer deposition.

US-A-4,024,301 discloses the addition of a branched polyaromatic amine such as o-phenylene diamine as a coating for the reactor surface.

US-A-3,997,707 discloses the addition of oxalic acid or its salt to the polymerization recipe in an effort to reduce reactor wall fouling.

FR-A-2,295,971 discloses that the internal surfaces of a stainless steel reactor for vinyl chloride polymerization can be conditioned by contact with a mixture of two kinds of compound. The first kind of compound is a polar organic compound or an organic dye. The second type of compound is a metal halide, hydroxide, oxide or carboxylate, or an oxyacid or an inorganic salt thereof, of an element of the second to sixth period of Group IIB or sub-Group A or B of Groups III to VII of the Periodic Table. There is no specific reference anywhere in the Specification to alkali metal hydroxides in general and further there is no reference to any specific metal hydroxide for use in the conditioning mixture. In this connection, Example 14 refers to the presence of sodium hydroxide or calcium hydroxide in the polymerization mixture and not in the conditioning mixture (see page 24 lines 4/5).

The French Patent teaches that the reactor surfaces are treated with a solution or dispersion of the conditioning mixture or separately with a solution or dispersion of the first type of compound and a solution or dispersion of the second type of compound. There is no reference to the concentration of the solutions or dispersions, except in the Examples. With the exception of Example 10, the concentration of the conditioning mixture and/or the second type of compound does not exceed 1%. Example 10 discloses inter alia the use of 4% solutions but comparison with the results obtained using 1% solutions indicate that satisfactory results are obtained at significantly lower concentrations than 4%.

The teaching of the French Patent in respect of the use of alkali metal hydroxides in conditioning the inner surfaces of stainless steel reactors can be summarised as being that they are a small and unexemplified subclass of the type of compound which can be used in combination with an organic polar compound or organic dye for the conditioning of such surfaces. It is to be expected that concentrations of 1% would be effective for this purpose.

As mentioned above, where specific reference is made to sodium hydroxide in Example 14, it is as an additive to the polymerization mixture and not as a component of the conditioning mixture. The concentrations of sodium hydroxide referred to in Example 14 range from 0.01% to 0.1% and the passage of page 8 line 31 to page 9 line 2 refers in general terms to the use of up to 10% of an alkali substance.

East German Patent Specification No. 124924 discloses the conditioning of the internal surface of a stainless steel polymerisation reactor in a plant for manufacturing vinyl chloride by suspension polymerisation, the reactor being treated with an aqueous solution of an alkali metal hydroxide.

Although many of the above described prior art systems do inhibit wall fouling, the treatment methods are

**0 006 335**

often difficult to perform and the treating compositions quite expensive.

Our aim was to find a treatment method which:

(a) is capable of reducing vinyl chloride polymer depositions in stainless steel polymerization reactors to a level at least commensurate with, if not better than, many of the reported commercially used processes;

(b) uses a solution which is relatively inexpensive compared to many prior art systems; and

(c) uses a solution which is relatively non-corrosive to commercial equipment and, in addition, is relatively easy to handle.

According to the present invention, there is provided a method for conditioning the internal surface(s) of a stainless steel polymerization reactor in a plant for manufacturing polymers containing vinyl chloride by suspension polymerization which method comprises the steps of wetting the internal surface(s) of said stainless steel polymerisation reactor with a solution containing an alkali metal hydroxide in an amount of 5 to 50% by weight in a solvent which is inert to said hydroxide and does not degrade or discolour the polymer, characterised in that the alkali metal hydroxide is dissolved in a lower alkanol having from 1 to 4 carbon atoms.

The invention also provides a process for the suspension polymerization of vinyl chloride or vinyl chloride monomer systems in a stainless steel polymerization vessel conditioned to inhibit fouling of the internal surface(s) thereof characterised in that said stainless steel polymerization reactor is conditioned by the aforementioned method of the invention prior to receiving a charge to be polymerized.

Preferably a recipe comprising vinyl chloride or a mixture of vinyl chloride and another vinyl monomer, water, suspension agent, and a monomer soluble polymerization catalyst is charged at an initial pH above 6.0 to a stainless steel reactor conditioned to inhibit fouling of the internal surface(s) thereof and subsequently polymerized at an elevated temperature to produce vinyl chloride containing polymer. According to the present invention, the internal surface(s) of the reactor are conditioned by wetting with a solution comprising from 5-50% by weight of an alkali metal hydroxide and the wet surface(s) are heated to a temperature of from 40-100°C for a period of at least five minutes prior to charging the recipe to the reactor.

It has been found that when the concentration of alkali metal hydroxide is reduced below 5% by weight, there is often insufficient alkali metal hydroxide deposited on the internal reactor surfaces to substantially inhibit polymer deposition on the reactor surface(s). On the other hand, as the proportion of alkali metal hydroxide exceeds about 50% by weight, any advantages are not commensurate with the additional cost associated with the higher concentration of alkali metal hydroxide. Furthermore, it becomes difficult to handle the solution under plant conditions.

For reasons of economy and efficiency, and based on the results obtained, we would recommend that the solution should comprise 10 to 25% by weight of alkali metal hydroxide.

The alkali metal in the alkali metal hydroxide is preferably selected from the group consisting of sodium, potassium and lithium. Although quite often ammonium hydroxide is viewed as an alkali metal hydroxide, or at least equivalent thereto, ammonium hydroxide is not intended to be included within this definition.

Preferably, the wet internal surfaces are heated to a temperature of from 40 to 100ºC for a period of at least five minutes. It is apparent that this heat treatment generally increases the effectiveness of the conditioning and temperatures in the range of 60 to 80° C are preferred. Heating times should normally be between 10 and 30 minutes although heating times, for example up to ten hours, do not seem to have any serious adverse effects.

If desired, the internal surfaces can be heated to a temperature of from 40 to 100ºC prior to and whilst the reactor surface is being wetted although this is not preferred.

Of the lower alkanols that are used as solvents, methanol and ethanol are preferred.

In some cases it is preferred to add from 0.005 to 0.5 parts by weight of surfactant to the solution. The surfactant enhances the coverage of the reactor surface particularly when there is some polymer deposit already on the reactor walls. The decision to use a surfactant generally is based on viewing the coating of the surface and ascertaining the coverage being effected. If the coverage is small and the treating solution appears to "run off" then surfactant should be used. Conventional surfactants include quaternary ammonium aryl halides.

In order to inhibit wall fouling, the alkali metal hydroxide solution is preferably applied to not only the internal surface(s) of the reactor but also to the agitator blades, agitator shaft, baffles and other elements therein in sufficient amount to wet their surfaces prior to charging the recipe. The application of the alkali metal hydroxide solution can be conducted in many ways, but the simplest and fastest is to spray the solution directly onto the reactor surfaces. In addition, it normally results in the usage of less material. Alternatively, the reactor can be charged with the alkali metal hydroxide solution and stirred by means of the reactor agitator and then drained. After the internal reactor surfaces have been contacted with the alkali metal hydroxide solution, the excess solution is drained from the reactor. The reactor is then in a broad sense ready to be charged with the vinyl chloride polymerization recipe.

The conditioning in accordance with the present invention is most effective with those conventional vinyl chloride recipes where the initial pH of the recipe at the commencement of polymerization is at or above 6.0 and preferably above 7.8. When the initial pH falls below about 7 the acidity of the polymer recipe may neutralise a substantial proportion of the residual alkali metal hydroxide at the reactor surface and reduce its ability to reduce reactor fouling.

It should be noted that recipes which incorporate acids or acidic buffers, for example phosphoric acid or phosphates which reduce the pH of the recipe to below 6 and even as low as 4.5, react with the alkali metal hydroxide and reduce its effectiveness.

3

Vinyl chloride recipes which are suspension-polymerized to form a homopolymer or copolymer generally contain water in an amount to provide from 35 to 65% solids; from about 0.05 to 1.5% suspending agent, for example, carboxymethyl cellulose, hydroxyethyl cellulose, and from about 0.01 to 0.5% of a monomer soluble polymerization initiator, for example azo bisvaleronitrile, t-butyl perneodecanoates, t-butyl peroxypivalate, and lauryl peroxide. Other monomers copolymerizable with vinyl chloride can be added, and these include vinyl acetate, butyl acrylate, ethylene, propylene, diethyl fumarate and diethyl maleate. Of these, vinyl acetate in an amount of from 5 to 20% by weight of the polymer formed is preferred. However, it has been found that the best results are obtained with a homopolymer system.

Various tests were conducted in order to ascertain the effectiveness of certain treatments.

Because of the difficulty in obtaining reproducibility of data in suspension polymerization processes, particularly with respect to wall fouling in the reactor, several laboratory runs were made with identical polymer recipes in similarly equipped reactors. The results were evaluated based on the number of grams polymer retained, exclusive of loose material in the reactor, after a set number of batches had been conducted. The evaluation was made after several runs as it was known that the rate of polymer deposition increases with increasing polymer deposit on the reactor walls.

The two laboratory reactors used in the evaluation were Chemco MDX-GJ model 1.5 liter 316 stainless steel reactors. The first had an electropolished surface, and the second had a manually polished surface. (The basic difference is in the smoothness of the interior reactor surface, the electropolished surface being much smoother and less susceptible to fouling.) In reactors 1 and 2 the recipes were as follows:

## REACTOR 1 (Electropolished Surface)

Water 600 grams
Vinyl chloride monomer... 300 grams
Hydroxypropyl methyl cellulose[1] 0.27 grams
t-butylperoxyneodecanoate[3] 0.3 ml
Temperature - 59°C
Agitation Rate - 700 RPM

## REACTOR 2 (Manually Polished Surface)

Water 600 grams
Vinyl chloride monomer... 300 grams
Hydroxypropyl methyl cellulose[2] 0.50 grams
t-butylperoxyneodecanoate[3] 0.3 ml
Temperature - 59°C
Agitation Rate - 700 RPM

1 - Hydroxypropyl methyl cellulose having a 2% aqueous solution viscosity of $3.5 \times 10^{-2}$ Nm$^{-2}$ (35 cps), at 20°C and sold under the registered trade mark Methocel K-35.

2 - Hydroxypropyl methyl cellulose having a 2% aqueous solution viscosity of $5 \times 10^{-2}$ Nm$^{-2}$ (50 cps), at 20°C and sold under the registered trade mark Methocel E-50.

3 - t-butylperoxyneodecanoate sold under the registered trade mark Lupersol-10 (75% in mineral spirits).

Each of the polymer recipes was polymerized to form a vinyl chloride polymer having an inherent viscosity of about 0.92 and the polymerization was terminated when the reaction pressure dropped about $2.4 \times 10^{5}$ Nm$^{-2}$ (20 psig) from the initial pressure. As can be seen from the recipes, there were no buffers or strongly alkaline materials present except for the residual caustic remaining from the conditioning. The initial pH of the recipes was above 7.0 in all cases.

In the runs relating to the process of this invention the general method was to wet the reactor surface thoroughly by spraying the walls with the solution designated and then draining the excess from the reactor prior to charging the recipe. In some cases, where indicated, the reactor surfaces were heated prior to charging the recipes. In the laboratory an electric heat gun was applied to the surface of the reactor for a time to dry the surface as evidenced by a whitish appearance. Usually this took about 5 minutes and it was believed the maximum surface temperature reached was about 60-80°C.

In some cases where a comparison was made with prior art technology minor additions of components, as indicated, were added to the polymer recipe.

Each run was evaluated to determine if the pretreatment had any effect on yield or particle size. A bimodal indication meant that two peaks were noted in a particle size distribution curve using sieve analysis. The number of batches carried out in the reactor and the fouling, i.e. the total grams of material deposited upon the reactor surfaces exclusive of loose material were recorded. Tables 1 and 2 below give the results for reactor 1 and reactor 2, respectively.

**Table 1**

**Reactor 1**

| EXAMPLES | ANTI-FOULING TREATMENT | SURFACTANT LEVEL K-35 ml | YIELD | BIMODAL | BATCHES | TOTAL FOULING (grams) |
|---|---|---|---|---|---|---|
| 1 | Control no Treatment | 0.27 | 78<br>80<br>77 | No<br>No<br>No | 3 | 26.6 |
| 2 | Control no Treatment | 0.27 | 79<br>79<br>73 | Yes<br>No<br>Yes | 3 | 28.0 |
| 3 | 30% NaOH in methanol, air dried at room temp. 1 hr. | 0.27 | 79<br>76<br>79 | No<br>No<br>No | 3 | 3.3 |
| 4 | 30% KOH in methanol, heated at 70°C for 30 min. | 0.27 | 79<br>79<br>79 | No<br>No<br>No | 3 | 0.00 |

0 006 335

**Table 2**

**Reactor 2**

| EXAMPLES | ANTI-FOULING TREATMENT | SURFACTANT g. | YIELD | BIMODAL | BATCHES | FOULING (gm.) |
|----------|------------------------|---------------|-------|---------|---------|---------------|
| 5 | Control | 0.5 | 78 | Yes | 2 | 55.3 |
|   |         |     | 70 | Yes |   |      |
| 6 | Control | 0.5 | 67 | No | 2 | 52.4 |
|   |         |     | 69 | No |   |      |
| 7 | 30% KOH in methanol, heated at 70$^O$ for 30 min. | 0.5 | 83 | Yes | 2 | 1.3 |
|   |         |     | 80 | Yes |   |      |

The results in Tables 1 and 2 show that the alkali metal hydroxide treatment is effective for inhibiting wall fouling in suspension polymerization as compared to the control batches. The results also show that, heating the wet reactor surface prior to charging the recipe to the reactor significantly reduces the wall fouling even more than the alkali metal hydroxide treatment alone.

In comparing the results obtained by using the alkali metal hydroxide spray with commercially available methods, e.g. the use of disodium calcium ethylene diamine tetracetic acid, the results appear to be at least as good, if not better, in most instances without regard for the simplified and more inexpensive method for reactor treatment.

## Claims

1. A method for conditioning the internal surface(s) of a stainless steel polymerization reactor in a plant for manufacturing polymers containing vinyl chloride by suspension polymerization which method comprises the step of wetting the internal surface(s) of said stainless steel polymerization reactor with a solution containing an alkali metal hydroxide in an amount of 5 to 50% by weight in a solvent which is inert to said hydroxide and does not degrade or discolour the polymer, characterised in that the alkali metal hydroxide is dissolved in an alkanol having from 1 to 4 carbon atoms.

2. A method according to Claim 1, characterised in that the alkali metal hydroxide is present in an amount of 10 to 25 parts by weight.

3. A method according to Claim 1 or 2, characterised in that said alkali metal hydroxide is sodium, potassium or lithium hydroxide.

4. A method according to any one of Claims 1, 2 and 3, characterised in that it includes the step of heating the wet internal surface(s) to a temperature of from 40 to 100°C for a period of at least five minutes.

5. A method according to any one of the preceding CClaims, characterised in that said internal surface(s) are heated to a temperature of from 40 to 100°C prior to and while said internal surfaces are wetted.

6. A method as claimed in any one of the preceding Claims, characterised in that the alkali metal hydroxide is potassium hydroxide and the alkanol is methanol.

7. A method according to any one of the preceding Claims, characterised in that said solution further contains from 0.005 to 0.5 parts by weight surfactant.

8. A process for the suspension polymerization of vinyl chloride or vinyl chloride monomer systems in a stainless steel polymerization vessel conditioned to inhibit fouling of the internal surface(s) thereof, characterised in that said stainless steel polymerization reactor is conditioned in accordance with any one of the preceding Claims prior to receiving a charge to be polymerized.

9. A suspension polymerization process according to Claim 8 wherein a recipe comprising vinyl chloride or a mixture of vinyl chloride and another vinyl monomer, water, suspension agent, and a monomer soluble polymerization catalyst is charged at an initial pH above 6.0 to a stainless steel reactor conditioned to inhibit fouling of the internal surface(s) thereof and subsequently polymerized at an elevated temperature to produce vinyl chloride containing polymer, characterised in that the internal surface(s) of the reactor are conditioned by wetting with a solution comprising from 5-50% by weight of an alkali metal hydroxide and the wet surface(s) are heated to a temperature of from 40-100°C for a period of at least five minutes prior to charging the recipe to the reactor.

## Patentansprüche

1. Verfahren zur Konditionierung der inneren Oberfläche(n) eines Polymerisationsreaktor aus rostfreiem Stahl in einer Anlage zu Herstellung von Polymeren, die Vinylchlorid enthalten, durch Suspensionspolymerisation, wobei das Verfahren die Stufe des Befeuchtens der inneren Oberfläche(n) des Polymerisationsreaktors aus rostfreiem Stahl mit einer Lösung umfaßt, die ein Alkalimetallhydroxid in einer Menge Von 5 bis 50 Gew.-% in einem Lösungsmittel enthält, das gegenüber dem Hydroxid inert ist und das Polymer nicht verschlechtert oder verfärbt, dadurch gekennzeichnet, daß das Alkalimetallhydroxid in einem Alkanol mit von 1 bis 4 Kohlenstoffatomen gelöst ist.

2. Verfahren nach Anspruch 1, dadurch gekennzeichnet, daß das Alkalimetallhydroxid in einer Menge von 10 bis 25 Gewichtsteilen vorhanden ist.

3. Verfahren nach Anspruch 1 oder 2, dadurch gekennzeichnet, daß das Alkalimetallhydroxid Natrium-, Kalium- oder Lithiumhydroxid ist.

4. Verfahren nach einem der Ansprüche 1, 2 und 3, dadurch gekennzeichnet, daß es die Stufe des Erwärmens der feuchten inneren Oberfläche(n) auf eine Temperatur von 40 bis 100°C während eines Zeitraums von mindestens 5 Minuten umfaßt.

5. Verfahren nach einem der vorstehenden Ansprüche, dadurch gekennzeichnet, daß die innere(n) Oberfläche(n) vor und während die innere(n) Oberfläche(n) befeuchtet werden auf eine Temperatur von 40 bis 100°C erwärmt wird (werden).

6. Verfahren nach einem der vorstehenden Ansprüche, dadurch gekennzeichnet, daß das Alkalimetallhydroxid Kaliumhydroxid und das Alkanol Methanol ist.

7. Verfahren nach einem der vorstehenden Ansprüche, dadurch gekennzeichnet, daß die Lösung weiterhin von 0,005 bis 0,5 Gewichtsteile einer oberflächenaktiven Substanz enthält.

8. Verfahren zur Suspensionspolymerisation von Vinylchlorid- oder Vinylchloridmonomer-Systemen in einem Polymerisationsgefäß aus rostfreiem Stahl, das konditioniert ist, um das Verschmutzen seiner inneren Oberfläche(n) zu hemmen, dadurch gekennzeichnet, daß der Polymerisationsreaktor aus rostfreiem Stahl vor der Aufnahme einer zu polymerisierenden Charge entsprechend einem der vorstehenden Ansprüche konditioniert wurde.

9. Suspensionspolymerisationsverfahren nach Anspruch 8, worin eine Rezeptur, die Vinylchlorid oder eine Mischung von Vinylchlorid und einem anderen Vinylmonomer, Wasser, ein Suspensionsmittel und einen im Monomer löslichen Polymerisationskatalysator umfaßt, bei einem Anfangs pH-Wert größer 6,0 einem Reaktor aus rostfreiem Stahl zugeführt wird, der konditioniert wurde, um das Verschlechtern seiner inneren Oberfläche(n) zu hemmen und nachfolgend bei einer erhöhten Temperatur polymerisiert wird, um ein Vinylchloridhaltiges Polymer herzustellen, dadurch gekennzeichnet, daß die innere(n) Oberfläche(n) des Reaktors konditioniert wurde(n), indem sie vor der Beschickung des Reaktors mit dieser Rezeptur mit einer Lösung befeuchtet wurde(n), die von 5 bis 50 Gew.-% eines Alkalimetallhydroxids umfaßt und die feuchte(n) Oberfläche(n) auf eine Temperatur von 40 bis 100°C während eines Zeitraumes von mindestens 5 Minuten erwärmt wurde(n).

## Revendications

1. Méthode pour conditionner la (les) surface(s) interne(s) d'un réacteur de polymérisation en acier inoxydable d'une installation de fabrication de polymères contenant du chlorure de vinyle par polymérisation en suspension, cette méthode comprenant le stade de mouillage de la (les) surface(s) interne(s) dudit réacteur de polymérisation en acier inoxydable avec une solution contenant un composé de métal alcalin en une quantité de 5 à 50 % en poids dans un solvant inerte vis-à-vis dudit composé et qui ne dégrade pas le polymère ou n'en altère pas la couleur, caractérisée en ce que l'hydroxyde de métal alcalin est dissous dans un alcanol comportant de 1 à 4 atomes de carbone.

2. Méthode selon la revendication 1, caractérisée en ce que l'hydroxyde de métal alcalin est présent à raison de 10 à 25 parties en poids.

3. Méthode selon l'une des revendications 1 ou 2, caractérisée en ce que ledit hydroxyde de métal alcalin est l'hydroxyde de sodium, de potassium ou de lithium.

4. Méthode selon l'une quelconque des revendications 1, 2 ou 3, caractérisé en ce qu'elle comprend un stade de chauffage de la (des) surface(s) interne(s) mouillée(s) à une température de 40 à 100°C pendant une période d'au moins 5 minutes.

5. Méthode selon l'une quelconque des revendications précédentes, caractérisé en ce que ladite (lesdites) surface(s) interne(s) est (sont) chauffée(s) à une température de 40 à 100°C avec et pendant que lesdites surfaces internes sont mouillès.

6. Méthode selon l'une quelconque des revendications précédentes, caractérisée en ce que l'hydroxyde de métal alcalin est l'hydroxyde de potassium et l'alcanol est le méthanol.

7. Méthode selon l'une quelconque des revendications précédentes, caractérisée en ce que ladite solution contient de plus de 0,005 à 0,5 partie en poids d'agent tensioactif.

8. Procédé pour la polymérisation en suspension du chlorure de vinyle ou de systèmes monomères à base de chlorure de vinyle, dans un récipient de polymérisation en acier inoxydable conditionné pour inhiber l'encrassement de sa (ses) surface(s) interne(s), caractérisé en ce que ledit réacteur de polymérisation en acier inoxydable est conditionné selon l'une quelconque des revendications précédentes avant de recevoir une charge à polymériser.

9. Procédé de polymérisation en suspension selon la revendication 8, dans lequel une composition comprenant du chlorure de vinyle ou un mélange de chlorure de vinyle et d'un autre monomère vinylique, de l'eau, un agent de suspension et un catalyseur de polymérisation soluble dans le monomère, est chargée à un pH initial supérieur à 6,0 dans un réacteur en acier inoxydable conditionné pour inhiber l'encrassement de sa (ses) surface(s) interne(s) puis polymérisée à une température élevée pour produire un polymère contenant du chlorure de vinyle, caractérisé en ce que la (les) surface(s) interne(s) est (sont) conditionnée(s) par mouillage avec une solution comprenant 5 à 50 % en poids d'un hydroxyde de métal alcalin et la (les) surface(s) humide(s) est (sont) chauffée(s) à une température de 40 à 100°C pendant une période d'au moins 5 minutes avant que la composition soit chargée dans le réacteur.